(19) Europäisches Patentamt
European Patent Office
Office européen des brevets

(11) EP 4 489 101 A2

(12) # EUROPEAN PATENT APPLICATION

(43) Date of publication:
**08.01.2025 Bulletin 2025/02**

(21) Application number: **24181647.9**

(22) Date of filing: **12.06.2024**

(51) International Patent Classification (IPC):
***H01M 4/131*** *(2010.01)* ***H01M 4/36*** *(2006.01)*
***H01M 4/525*** *(2010.01)* ***H01M 10/0525*** *(2010.01)*
***H01M 10/0567*** *(2010.01)* *H01M 4/02* *(2006.01)*

(52) Cooperative Patent Classification (CPC):
**H01M 10/0525; H01M 4/131; H01M 4/364; H01M 4/525; H01M 10/0567;** H01M 2004/028; H01M 2300/0025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.06.2023 KR 20230075135**

(71) Applicant: **SAMSUNG SDI CO., LTD.**
**Giheung-gu**
**Yongin-si, Gyeonggi-do**
**17084 (KR)**

(72) Inventors:
- **Choi, Seonju**
  **17084 Yongin-si, Gyeonggi-do (KR)**
- **Kim, Kyoungsoo**
  **17084 Yongin-si, Gyeonggi-do (KR)**
- **Kim, Yunhee**
  **17084 Yongin-si, Gyeonggi-do (KR)**
- **Park, Dohyung**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(54) **RECHARGEABLE LITHIUM BATTERIES**

(57) A rechargeable lithium battery including a positive electrode, a negative electrode, a separator, and a non-aqueous electrolyte is provided. The positive electrode includes a first positive electrode active material including lithium nickel-based composite oxide in the form of secondary particles as a plurality of primary particles agglomerated. The positive electrode includes a second positive electrode active material including lithium nickel-based composite oxide in the form of single particles. The non-aqueous electrolyte includes an organic solvent, a lithium salt, and an additive, and the additive includes a bicyclic sulfate compound.

EP 4 489 101 A2

## Description

## BACKGROUND

### 1. Field

According to one or more embodiments, the present disclosure relates to rechargeable lithium batteries.

### 2. Description of the Related Art

A portable information device such as a cell phone, a laptop, a smart phone, and/or the like and/or an electric vehicle may utilize as a driving power source a rechargeable lithium battery having relatively high energy density and relatively high portability. Recently, research has been actively conducted to utilize a rechargeable lithium battery with relatively high energy density as a driving power source, e.g., for hybrid and/or electric vehicles and/or power storage power source, e.g., for resident power storage (e.g., a power wall).

In order to meet these purposes, a nickel-based positive electrode active material capable of securing high capacity is being applied to a positive electrode of the rechargeable lithium battery. However, if the nickel-based positive electrode active material is utilized in a high-voltage battery, degradation reactions, such as gas generation, and/or the like may occur, e.g., due to by-products on the positive electrode active material surface. As a result, resistance may greatly increase during the discharging/charging cycles due to a substantially continuous generation of side-reactants, and battery performance may be deteriorated, e.g., due to electrolyte decomposition at a high temperature.

Recently, research is being conducted on preparing the nickel-based positive electrode active material by mixing secondary particles and single particles to compensate for deterioration occurring if the secondary particles alone are utilized. However, if an electrode is formed by mixing particles with different shapes, gas may be generated due to a difference in a degree of reaction on each type or kind of particle surface. For example, residual lithium causing a side reaction may be non-uniformly (substantially non-uniformly) present, and the particles may be non-uniformly (substantially non-uniformly) deteriorated due to different reaction rates (e.g., of lithium) on the particle interface and inside the particles.

## SUMMARY

The invention is defined by the appended claims. The description that follows is subjected to this limitation. Any disclosure lying outside the scope of said claims is only intended for illustrative as well as comparative purposes. One or more aspects are directed toward a positive electrode design utilizing a nickel-based positive electrode active material prepared by mixing particles with different shapes and a non-aqueous electrolyte capable of forming (or providing) a stable film with high conductivity on the positive electrode surface.

One or more aspects are directed toward a rechargeable lithium battery capable of suppressing or reducing gas generation and, also, suppressing or reducing a non-substantially uniform reaction and resistance increase in an electrode according to substantially continuous generation of side reactants.

Additional aspects will be set forth in part in the description which follows and, in part, will be apparent from the description, or may be learned by practice of the presented embodiments of the disclosure.

According to the present invention, a rechargeable lithium battery includes a positive electrode, a negative electrode, a separator, and a non-aqueous electrolyte, wherein the positive electrode includes a first positive electrode active material and a second positive electrode active material. The first positive electrode active material is in the form of secondary particles including a lithium nickel-based composite oxide and a plurality of primary particles being agglomerated. The second positive electrode active material is in the form of single particles (e.g., each being a monolithic particle) and includes a lithium nickel-based composite oxide. The non-aqueous electrolyte includes an organic solvent, a lithium salt, and an additive, and the additive includes a bicyclic sulfate compound represented by Chemical Formula 1.

The rechargeable lithium battery according to some embodiments may realize relatively high capacity and relatively high energy density and effectively suppress or reduce resistance increase, e.g., due to a solid film with high conductivity on the positive electrode surface. The rechargeable lithium battery may also suppress or reduce an increase of side reactions (e.g., caused by repeated charges and discharges) to improve the resistance increase during the cycles. The rechargeable lithium battery may also improve (e.g., absorb) an amount of gas generation according to substantially continuous crack generation.

## BRIEF DESCRIPTION OF THE DRAWINGS

FIGs. 1-4 are each a cross-sectional view schematically showing a rechargeable lithium battery according to some embodiments.

## DETAILED DESCRIPTION

Hereinafter, specific embodiments will be described in more detail so that those of ordinary skill in the art can easily implement them. Examples of which are illustrated in the accompanying drawings, wherein like reference numerals refer to like elements throughout, and duplicative descriptions thereof may not be provided. Accordingly, the embodiments are merely described, by referring to the drawings, to explain aspects of the present description. However, the present disclosure may be embodied in many different forms and is not construed as limited to the example embodiments set forth herein, rather the present disclosure is defined by the scope of claims.

The terminology utilized herein is utilized to describe embodiments only, and is not intended to limit the present disclosure. The singular expressions "a," "an," and "the" include the plural expressions, including "at least one," unless the context clearly dictates otherwise.

As utilized herein, "combination thereof" refers to a mixture, laminate, composite, copolymer, alloy, blend, reaction product, and/or the like of the constituents.

Herein, it should be understood that terms such as "comprises," "comprise," "comprising," "includes," "including," "include," "having," "has," and/or "have" are intended to designate the presence of an embodied aspect, number, operation, element, and/or any suitable combination thereof, but it does not preclude the possibility of the presence or addition of one or more other feature, number, operation, element, and/or any suitable combination thereof.

In the drawings, the thickness of layers, films, panels, regions, and/or the like, are exaggerated for clarity wherein like reference numerals designate like elements, and duplicative descriptions thereof may not be provided throughout the specification. It will be understood that if an element such as a layer, film, region, or substrate is referred to as being "on" another element, it can be directly on the other element or intervening elements may also be present. In contrast, if an element is referred to as being "directly on" another element, there are no intervening elements present.

In one or more embodiments, the term "layer" herein includes not only a shape formed on the whole surface if viewed from a plan view, but also a shape formed on a partial surface.

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.

As utilized herein, the term "and/or" includes any, and all, combinations of one or more of the associated listed items. Expressions such as "at least one of," "one of," and "selected from," if preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to cross-sectional views, which are schematic views of idealized embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

**Definitions**

The term "particle diameter" as utilized herein refers to an average diameter of particles if the particles are spherical, and refers to an average major axis length of particles if the particles are non-spherical. For example, the average particle diameter may be measured by a method well suitable to those skilled in the art, for example, may be measured by a particle size analyzer, or may be measured by a transmission electron microscopic image or a scanning electron microscopic image. It may be possible to obtain an average particle diameter value by measuring utilizing a dynamic light scattering method, performing data analysis, counting the number of particles for each particle size range, and calculating from this. Unless otherwise defined, the average particle diameter may refer to the diameter ($D_{50}$) of particles having a cumulative volume of 50 volume% in the particle size distribution. If measuring by laser diffraction, more specifically, the particles to be measured are dispersed in a dispersion medium and then introduced into a related art laser diffraction particle size measuring device (e.g., MT 3000 available from Microtrac, Ltd.) utilizing ultrasonic waves at about 28 kHz, and after irradiation with an output of 60 W, the average particle diameter (D50) based on 50% of the particle size distribution in the measuring device can be calculated. As utilized herein, if a definition is not otherwise provided, the average particle diameter refers to a diameter ($D_{50}$) of particles having a cumulative volume of 50 volume% in the particle size distribution that is obtained by measuring the size (diameter or length of the major axis) of about 20 particles at random in a scanning electron microscopic image.

In present disclosure, "not include a or any 'component'" "exclude a or any 'component'", "'component'-free", and/or the like refers to that the "component" not being added, selected or utilized as a component in the composition/structure, but the "component" of less than a suitable amount may still be included due to other impurities and/or external factors.

"Metal" is interpreted as a concept including ordinary metals, transition metals and metalloids (semi-metals).

As utilized herein, "substituted" refers to replacement of at least one hydrogen of a compound by a substituent of (e.g., selected from among) a halogen atom (F, Cl, Br, or I), a hydroxy group, a C1 to C20 alkoxy group, a nitro group, a cyano group, amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, and/or any suitable combination thereof.

Herein, for example, C1 to C20 refers to having 1 to 20 carbon atoms.

**Rechargeable Lithium Battery**

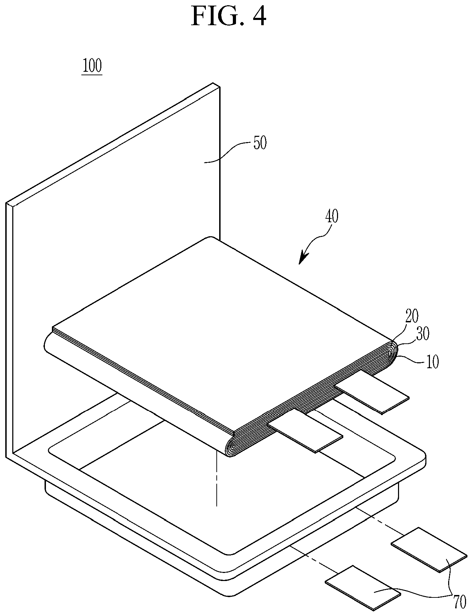

The rechargeable lithium battery may be classified into cylindrical, prismatic, pouch, coin, and/or the like depending on the shape. FIGs. 1 to 4 are each a schematic view illustrating a rechargeable lithium battery according to some embodiments. FIG. 1 shows a cylindrical battery, FIG. 2 shows a prismatic battery, and FIGs. 3 and 4 show pouch-type or kind batteries. Referring to FIGs. 1 to 4, the rechargeable lithium battery 100 includes an electrode assembly 40 with a separator 30 interposed between a positive electrode 10 and a negative electrode 20, and a case 50 in which the electrode assembly 40 is housed. The positive electrode 10, negative electrode 20, and separator 30 may be impregnated with an electrolyte. The rechargeable lithium battery 100 may include a sealing member 60 sealing the case 50 as shown in FIG. 1. In one or more embodiments, in FIG. 2, the rechargeable lithium battery 100 may include a positive lead tab 11, a positive terminal 12, a negative lead tab 21, and a negative terminal 22. As shown in FIG. 3, the rechargeable lithium battery 100 includes a positive electrode tab 71 and a negative electrode tab 72 serving as an electrical path for inducing the current formed in the electrode assembly 40 to the outside. As shown in FIG. 4, the rechargeable lithium battery 100 includes electrode tabs 70.

A rechargeable lithium battery includes a positive electrode, a negative electrode, a separator, and a non-aqueous electrolyte. The positive electrode includes a first positive electrode active material and a second positive

electrode active material. The first positive electrode active material is in the form of secondary particles including a lithium nickel-based composite oxide and a plurality of primary particles that are agglomerated (i.e., a plurality of primary particles are bound or joined with each other to form a secondary particle). The second positive electrode active material is in the form of single particles (e.g., each being a monolithic particle not being agglomerated with other particles) and includes a lithium nickel-based composite oxide. The non-aqueous electrolyte includes an organic solvent, a lithium salt, and an additive, and the additive includes a bicyclic sulfate compound represented by Chemical Formula 1.

**Positive Electrode**

The positive electrode includes a positive electrode current collector and a positive electrode active material layer on the positive electrode current collector, and the positive electrode active material layer includes a positive electrode active material and may (e.g., optionally) further include a binder, a conductive material, and/or a combination thereof. The positive electrode active material includes a first positive electrode active material and a second positive electrode active material each having different shapes. The first positive electrode active material includes a lithium nickel-based composite oxide that is in the form of secondary particles in which a plurality of primary particles are agglomerated, (e.g., the plurality of primary particles agglomerate to form the secondary particles). The second positive electrode active material includes a lithium nickel-based composite oxide that is in the form of (or provides) single particles.

A nickel-based positive electrode active material including the lithium nickel-based composite oxide may achieve or realize relatively high capacity and relatively high efficiency. However, as (e.g., undesirable) side reactions are accelerated (e.g., on surfaces of particles of the electrode active material)during the discharging/charging cycles, the electrode active material may undesirably generate gas products and increase resistance, thereby deteriorating cycle-life characteristics of the battery. The nickel-based positive electrode active material may be (e.g., is usually) in the form of secondary particles with a size of several micrometers ($\mu$m) to several tens of $\mu$m, and may be severely cracked by the repeated charges and discharges. The cracks may expose unreacted (e.g., newly exposed) surfaces of the primary particles to thereby increase the amount of undesirable side reactions and the resistance of the battery. To avoid (e.g., compensate for) the deterioration characteristics (e.g., in the case of utilizing the secondary particles alone as the nickel-based positive electrode active material), the present disclosure includes a method of manufacturing a positive electrode by mixing the first positive electrode active material, in the form of the secondary particles, and the second positive electrode active material in the form of single particles (e.g., each being a monolithic particle).

However, if particles with different shapes and/or sizes are mixed to form an electrode (e.g., electrode active material), there may be a difference of reaction rate on each (e.g., different type or kind) particle surface, and/or substantially non-uniform residual lithium on each (e.g., different type or kind) particle surface, which may accelerate side reactions. In some cases, there may be a difference of reaction rate on the particle interface and inside the particle, which may substantially non-uniformly deteriorate the particles and thus bring about problems of generating gas product(s) and increasing resistance of the battery. Accordingly, some embodiments of the present disclosure include a method of applying a non-aqueous electrolyte, as described in more detail herein, to the positive electrode to form a stable protective layer with high conductivity on the interface of the positive electrode. For example, the protective layer may suppress or reduce the substantially continuous side reactions in the positive electrode and, also, effectively suppress or reduce the non-substantially uniform reactions, the resistance increase, and control the amount of gas product(s) generation.

An average particle diameter ($D_{50}$) of the secondary particles of the first positive electrode active material may be larger than an average particle diameter ($D_{50}$) of the single particles of the second positive electrode active material. In this case, the first positive electrode active material may be expressed (e.g. referred to) as "large particles", and the second positive electrode active material may be expressed (e.g. referred to) as "small particles". By suitably of properly mixing the secondary particles and the single particles, the capacity and energy density of the nickel-based positive electrode may be maximized or increased and its cycle-life characteristics and durability may be improved.

The average particle diameter refers to a diameter ($D_{50}$) of particles having a cumulative volume of 50 volume% in the particle size distribution that is obtained by measuring the size (diameter or length of the major axis) of about 20 particles at random in a scanning electron microscopic image.

The average particle diameter ($D_{50}$) of the secondary particles of the first positive electrode active material may be, for example, 10 micrometer ($\mu$m) to 20 $\mu$m, 10 $\mu$m to 18 $\mu$m, or 12 $\mu$m to 16 $\mu$m. The average particle diameter ($D_{50}$) of the single particles of the second positive electrode active material may be, for example, 0.5 $\mu$m to 8 $\mu$m, 1 $\mu$m to 7 $\mu$m, 1.5 $\mu$m to 6 $\mu$m, or 2 $\mu$m to 5 $\mu$m. If the average particle diameter of each positive electrode active material satisfies the described ranges, high capacity and high energy density may be realized.

The first positive electrode active material may be included in an amount of 60 wt% to 95 wt%, for example, 70 wt% to 90 wt%, based on a total of 100 wt% of the first positive electrode active material and the second positive electrode active material. The second positive electrode active material may be included in an amount of 5 wt% to 40 wt%, for example, 10 wt% to 30 wt%, based on a total of 100 wt% of the first positive electrode active material and the

second positive electrode active material. If the mixing ratio of the first and second positive electrode active materials satisfies the described ranges, energy density may be increased while simultaneously maximizing or increasing capacity.

The lithium nickel-based composite oxide of the first positive electrode active material and the lithium nickel-based composite oxide of the second positive electrode active material may be the same or different, and may each independently include (e.g., contain) nickel in an amount of greater than or equal to 70 mol%, for example, greater than or equal to 80 mol%, greater than or equal to 90 mol%, or greater than or equal to 91 mol% based on 100 mol% of the total metal (e.g., of the composite oxide) excluding lithium. As an example, the lithium nickel-based composite oxide may be a high nickel-based oxide including (e.g., containing) greater than or equal to 80 mol% of nickel based on 100 mol% of the total metal (e.g., of the composite oxide) excluding lithium. At least one or both (e.g., simultaneously) of the first and second positive electrode active materials may be a high nickel-based positive electrode active material. In this case, it is possible to realize high capacity and high energy density while achieving excellent or suitable charge/discharge efficiency and cycle-life characteristics.

The lithium nickel-based composite oxide of the first positive electrode active material and the lithium nickel-based composite oxide of the second positive electrode active material may be the same or different from each other, and may each independently be represented by Chemical Formula 11.

Chemical Formula 11 $Li_{a1}Ni_{x1}M^1_{y1}M^2_{z1}O_{2-b1}X_{b1}$

In Chemical Formula 11, $0.9 \leq a1 \leq 1.8$, $0.3 \leq x1 \leq 1$, $0 \leq y1 \leq 0.7$, $0 \leq z1 \leq 0.7$, $0.9 \leq x1+y1+z1 \leq 1.1$, and $0 \leq b1 \leq 0.1$, $M^1$ and $M^2$ may each independently be at least one of (e.g., one or more selected from among) Al, B, Ba, Ca, Ce, Co, Cr, Cu, Fe, Mg, Mn, Mo, Nb, Si, Sn, Sr, Ti, V, W, and/or Zr, and X may be at least one element of (e.g., one or more selected from among) F, P, and/or S.

In some embodiments, for Chemical Formula 11, $0.7 \leq x1 \leq 1$, $0 \leq y1 \leq 0.3$, and $0 \leq z1 \leq 0.3$, or $0.8 \leq x1 \leq 1$, $0 \leq y1 \leq 0.2$, and $0 \leq z1 \leq 0.2$, or$0.9 \leq x1 \leq 1$, $0 \leq y1 \leq 0.1$, and $0 \leq z1 \leq 0.1$.

The lithium nickel-based composite oxide of the first positive electrode active material and the lithium nickel-based composite oxide of the second positive electrode active material may each independently be represented by Chemical Formula 12.

Chemical Formula 12 $Li_{a2}Ni_{x2}Co_{y2}M^3_{z2}O_{2-b2}X_{b2}$

In Chemical Formula 12, $0.9 \leq a2 \leq 1.8$, $0.3 \leq x2 \leq 1$, $0 \leq y2 \leq 0.7$, $0 \leq z2 \leq 0.7$, $0.9 \leq x2+y2+z2 \leq 1.1$, and $0 \leq b2 \leq 0.1$, $M^3$ may each independently be at least one element of (e.g., one or more selected from among) Al, B, Ba, Ca, Ce, Cr, Cu, Fe, Mg, Mn, Mo, Nb, Si, Sn, Sr, Ti, V, W, and Zr, and/or X may be at least one element of (e.g., one or more selected from among) F, P, and/or S.

In some embodiments, for Chemical Formula 12, $0.7 \leq x2 \leq 1$, $0 \leq y2 \leq 0.3$, and $0 \leq z2 \leq 0.3$, or $0.8 \leq x2 \leq 1$, $0 \leq y2 \leq 0.2$, and$0 \leq z2 \leq 0.2$, or$0.9 \leq x2 \leq 1$, $0 \leq y2 \leq 0.1$, and $0 \leq z2 \leq 0.1$.

The second positive electrode active material may be in the single particle form, may exist alone without a grain boundary within the particle, may include or be composed of one particle. The second positive electrode active material may have a single particle, a monolith structure, a one body structure, or may be a non-agglomerated particle, (e.g., in which particles are not agglomerated with each other but exist as an independent phase in terms of morphology). The second positive electrode active material may be expressed (e.g. referred to) as a "single particle" (one body particle, single grain), for example, as a single crystal.

**Binder**

In some embodiments, the binder, if included the positive electrode active material layer, may improve binding properties of positive electrode active material particles with one another and with a current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but are not limited thereto. A content of the binder may be 0.5 wt% to 5 wt% based on 100 wt% of the positive electrode active material layer.

**Conductive Material**

The conductive material may be included to provide electrode conductivity (e.g., electron conductor) and any suitable electrically conductive material may be utilized as a conductive material unless it causes a chemical change.

Examples of the conductive material may include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminum, silver, and/or the like; a conductive polymer such as a polyphenylene derivative; and/or one or more mixtures thereof.

A content of the conductive material may be 0.5 wt% to 5 wt% based on 100 wt% of the positive electrode active material layer.

The positive electrode current collector may include Al, but the present disclosure is not limited thereto.

**Negative Electrode**

The negative electrode may include a current collector and a negative electrode active material layer on the current collector, and may further include a negative electrode active material, a binder, a conductive material, and/or a combination thereof.

**Negative Electrode Active Material**

The negative electrode active material may include a material that reversibly intercalates/deintercalates lithium ions, a lithium metal, a lithium metal alloy, a material capable of doping/dedoping lithium, and/or transition metal oxide.

Examples of the material that reversibly intercalates/deintercalates lithium ions may include crystalline carbon, amorphous carbon, and/or a combination thereof as a carbon-based negative electrode active material. The crystalline carbon may be irregular, or sheet, flake, spherical, or a fiber shaped natural graphite or artificial graphite. The amorphous carbon may be a soft carbon, a hard carbon, a mesophase pitch carbonization product, calcined coke, and/or the like.

The lithium metal alloy may include an alloy of lithium and at least one metal of (e.g., one or more selected from among) Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (wherein Q is an element of (e.g., selected from among) an alkali metal, an alkaline-earth metal, a Group 13 element, a Group 14 element (excluding Si), a Group 15 element, a Group 16 element, a transition metal, a rare earth element, and/or a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or a combination thereof), and/or a combination thereof. The Sn-based negative electrode active material may be Sn, $SnO_2$, $SnO_x$ ($0 < x < 2$), a Sn alloy, and/or a combination thereof.

The silicon-carbon composite may be a composite of silicon and amorphous carbon, (e.g., for utilization in a negative electrode (i.e., cathode). An average particle diameter ($D_{50}$) of the silicon-carbon composite particles may be, for example, about 0.5 μm to about 20 μm. According to some embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may be (exist) dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, and/or a combination thereof. The amorphous carbon may include soft carbon or hard carbon, a mesophase pitch carbonized product, and calcined coke.

If the silicon-carbon composite includes silicon and amorphous carbon, a content of silicon may be 10 wt% to 50 wt% and a content of amorphous carbon may be 50 wt% to 90 wt%, based on 100 wt% of the silicon-carbon composite. In one or more embodiments, if the composite includes silicon, amorphous carbon, and crystalline carbon, a content of silicon may be 10 wt% to 50 wt%, a content of crystalline carbon may be 10 wt% to 70 wt%, and a content of amorphous carbon may be 20 wt% to 40 wt%, based on 100 wt% of the silicon-carbon composite.

Additionally, a thickness of the amorphous carbon coating layer may be 5 nanometer (nm) to 100 nm. An average particle diameter ($D_{50}$) of the silicon particles (primary particles) may be 10 nm to 1 μm, or 10 nm to 200 nm. The silicon particles may exist as silicon alone, in the form of a silicon alloy, or in an oxidized form. The oxidized form of silicon may be represented by $SiO_x$ ($0<x\leq2$). In some embodiments, the atomic content ratio of Si:O, which indicates a degree of oxidation, may be 99:1 to 33:67. As utilized herein, if a definition is not otherwise provided, an average particle diameter ($D_{50}$) indicates a particle where a cumulative volume is 50 volume% in a particle size distribution.

The Si-based negative electrode active material or Sn-based negative electrode active material may be mixed with the carbon-based negative electrode active material. If the Si-based negative electrode active material or Sn-based negative electrode active material and the carbon-based negative electrode active material are mixed and utilized, the

mixing ratio may be a weight ratio of 1:99 to 90:10.

**Binder**

In some embodiments, the negative electrode includes a binder that may (e.g., serves to) well adhere the negative electrode active material particles to each other and also to adhere the negative electrode active material to the current collector. The binder may be a non-aqueous binder, an aqueous binder, a dry binder, and/or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a combination thereof.

The aqueous binder may include a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a combination thereof.

If an aqueous binder is utilized as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and utilized. The alkali metal may be Na, K, or Li, and a combination thereof.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, and/or a combination thereof.

**Conductive Material**

In some embodiments, the negative electrode includes a conductive material that may provide electrode conductivity and any electrically conductive material may be utilized as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminum silver, and/or the like; a conductive polymer such as a polyphenylene derivative; and/or one or more mixtures thereof.

A content of the negative electrode active material may be 95 wt% to 99.5 wt% based on 100 wt% of the negative electrode active material layer, and a content of the binder may be 0.5 wt% to 5 wt% based on 100 wt% of the negative electrode active material layer. For example, the negative electrode active material layer may include 90 wt% to 99 wt% of the negative electrode active material, 0.5 wt% to 5 wt% of the binder, and 0.5 wt% to 5 wt% of the conductive material.

**Current Collector**

The negative electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the negative electrode current collector may be, for example, 1 μm to 20 μm, 5 μm to 15 μm, or 7 μm to 10 μm.

**Non-aqueous Electrolyte**

The non-aqueous electrolyte according to some embodiments includes an organic solvent, a lithium salt, and an additive, and the additive includes a bicyclic sulfate compound represented by Chemical Formula 1.

Chemical Formula 1

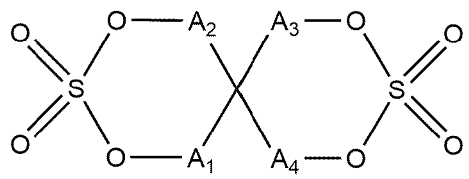

In Chemical Formula 1, $A_1$, $A_2$, $A_3$, and $A_4$ are each independently the same or different from each other and are each independently a covalent bond; a substituted or unsubstituted C1 to C5 alkylene group; a carbonyl group; or a sulfinyl group, provided that $A_1$ and $A_2$ are not simultaneously a covalent bond (e.g., at the same time) and As and $A_4$ are not simultaneously a covalent bond (e.g., at the same time).

**Additive**

In the non-aqueous electrolyte, the aforementioned bicyclic sulfate compound represented by Chemical Formula 1 may have a lower reduction potential (i.e., be earlier reduced) and be decomposed more easily than the organic solvent, e.g., at a relatively low voltage during the charge and discharge. In some embodiments, reduced ions and/or radicals may react with lithium ions to form a Solid Electrolyte Interface (SEI) on the negative electrode surface. For example, the bicyclic sulfate compound may form a complex by coordinating with transition metal ions of the positive electrode active material, which affects properties of the protective layer formed on the positive electrode surface. In other words, the composite may contribute to (e.g., more readily) forming a stable modified protective layer having high conductivity and maintaining a solid state (e.g., even after long-term changing and discharging on the positive electrode surface), compared with a protective layer formed by the organic solvent alone. Such a solid modified protective layer may effectively block or reduce the organic solvent (e.g., solvating the lithium ions) from entering the electrode during intercalation of the lithium ions. The modified protective layer formed by the bicyclic sulfate compound effectively blocks a direct contact of the organic solvent with the positive electrode, improving reversibility of intercalation and deintercalation of the lithium ions and as a result, increasing stability of a battery and improving cycle-life characteristics. In one or more embodiments, the solid modified protective layer with high conductivity, which is formed on the positive electrode, may suppress or reduce the substantially continuous side reactions, and/or the crack generation of the described nickel-based mixed positive electrode, and thus effectively control an amount of gas generation and a resistance increase rate. Furthermore, the bicyclic sulfate compound, in which a plurality of rings are bonded in a spiro structure, is thermally stable and thus may improve battery cycle-life characteristics at a high temperature.

For example, in Chemical Formula 1, at least one of (e.g., one or more selected from among) $A_1$, $A_2$, $A_3$, and/or $A_4$ may be an unsubstituted C1 to C5 alkylene group or a substituted C1 to C5 alkylene group. A substituent of the substituted C1 to C5 alkylene group may be, for example, a halogen group, a C1 to C20 alkyl group substituted or unsubstituted with a halogen, a C2 to C20 alkenyl group substituted or unsubstituted with a halogen, a C2 to C20 alkynyl group substituted or unsubstituted with a halogen, a C3 to C20 cycloalkenyl group substituted or unsubstituted with a halogen, a C3 to C20 heterocyclyl group substituted or unsubstituted with a halogen, a C6 to C40 aryl group substituted or unsubstituted with a halogen, a C2 to C40 heteroaryl group substituted or unsubstituted with a halogen, or a polar functional group including at least one heteroatoms.

For example, the substituent of the substituted C1 to C5 alkylene group may be a halogen, a methyl group, an ethyl group, a propyl group, an isopropyl group, a butyl group, a tert-butyl group, a trifluoromethyl group, a tetrafluoroethyl group, a phenyl group, a naphthyl group, a tetrafluorophenyl group, a pyrrolyl group, or a pyridinyl group.

As an example, the substituent of the substituted alkylene group of C1 to C5 may be a polar functional group containing a heteroatom, wherein the heteroatom of the polar functional group may be, for example, halogen, oxygen, nitrogen, phosphorus, sulfur, silicon, boron, and/or a combination thereof, and the polar functional group may include an alkyl group, an alkenyl group, an alkynyl group, a cycloalkyl group, an aryl group, a heteroaryl group, an alkylaryl group, a trialkylsilyl group, or an aralkyl group in addition to heteroatoms. For example, the halogen may be F (fluorine).

The aforementioned bicyclic sulfate compound represented by Chemical Formula 1 may be for example represented by Chemical Formula 2 or Chemical Formula 3.

Chemical Formula 2

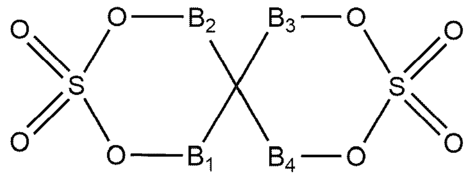

Chemical Formula 3

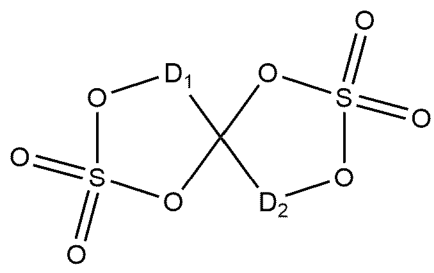

$B_1$, $B_2$, $B_3$, and $B_4$ of Chemical Formula 2 and $D_1$ and $D_2$ of Chemical Formula 3 are each independently the same or different from each other and are each independently $-C(E_1)(E_2)-$, a carbonyl group, or a sulfinyl group, and

$E_1$ and $E_2$ are each independently the same or different from each other and are each independently hydrogen, a halogen, a C1 to C20 alkyl group substituted or unsubstituted with a halogen, a C2 to C20 alkenyl group substituted or unsubstituted with a halogen, a C2 to C20 alkynyl group substituted or unsubstituted with a halogen, a C3 to C20 cycloalkenyl group substituted or unsubstituted with a halogen, a C3 to C20 heterocyclyl group substituted or unsubstituted with a halogen, a C6 to C40 aryl group of substituted or unsubstituted with a halogen, or a C2 to C40 heteroaryl group substituted or unsubstituted with a halogen.

For example, $E_1$ and $E_2$ may each independently be hydrogen; a halogen; a C1 to C10 alkyl group substituted or unsubstituted with a halogen; a C6 to C40 aryl group substituted or unsubstituted with a halogen; or a C2 to C40 heteroaryl group substituted or unsubstituted with a halogen.

For example, $E_1$ and $E_2$ may each independently be hydrogen, F, Cl, Br, I, a methyl group, an ethyl group, a propyl group, an isopropyl group, a butyl group, a tert-butyl group, a trifluoromethyl group, a tetrafluoroethyl group, a phenyl group, a naphthyl group, a tetrafluorophenyl group, a pyrrolyl group, or a pyridinyl group.

For example, $E_1$ and $E_2$ may each independently be hydrogen, F, a methyl group, an ethyl group, a trifluoromethyl group, a tetrafluoroethyl group, or a phenyl group.

The aforementioned bicyclic sulfate compound represented by Chemical Formula 1 may be for example represented by Chemical Formula 4 or Chemical Formula 5.

Chemical Formula 4

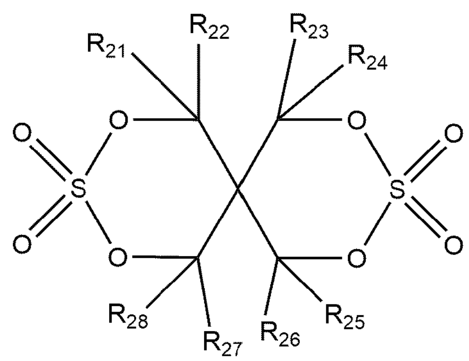

Chemical Formula 5

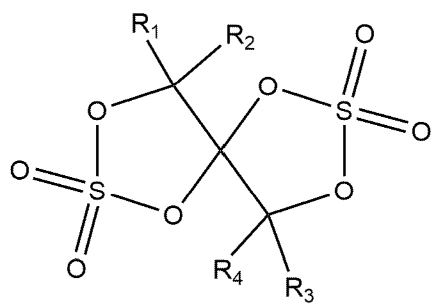

$R_{21}$, $R_{22}$, $R_{23}$, $R_{24}$, $R_{25}$, $R_{26}$, $R_{27}$, and $R_{28}$ in Chemical Formula 4 and $R_1$, $R_2$, $R_3$, and $R_4$ in Chemical Formula 5 are each independently the same or different from each other and are each independently hydrogen, a halogen, a C1 to C20 alkyl group substituted or unsubstituted with a halogen, a C6 to C40 aryl group substituted or unsubstituted with a halogen, or a C2 to C40 heteroaryl group substituted or unsubstituted with a halogen.

For example, $R_{21}$, $R_{22}$, $R_{23}$, $R_{24}$, $R_{25}$, $R_{26}$, $R_{27}$, and $R_{28}$ in Chemical Formula 4 and $R_1$, $R_2$, $R_3$, and $R_4$ in Chemical Formula 5 may each independently be hydrogen, F, Cl, Br, I, a methyl group, an ethyl group, a propyl group, an isopropyl group, a butyl group, a tert-butyl group, a trifluoromethyl group, a tetrafluoroethyl group, a phenyl group, a naphthyl group, a tetrafluorophenyl group, a pyrrole group, or a pyridine group.

For example, $R_{21}$, $R_{22}$, $R_{23}$, $R_{24}$, $R_{25}$, $R_{26}$, $R_{27}$, and $R_{28}$ in Chemical Formula 4 and $R_1$, $R_2$, $R_3$, and $R_4$ in Chemical Formula 5 may each independently be hydrogen, F, a methyl group, an ethyl group, a propyl group, a trifluoromethyl group, a tetrafluoroethyl group, or a phenyl group.

The aforementioned bicyclic sulfate compound represented by Chemical Formula 1 may be, for example, represented by at least one of Chemical Formula 6 to Chemical Formula 17. For example, one of these, or a mixture of two or more may be utilized.

Chemical Formula 6

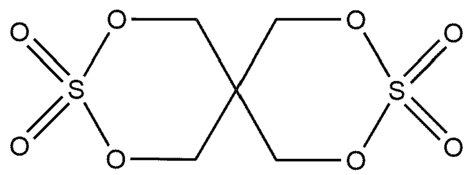

Chemical Formula 7

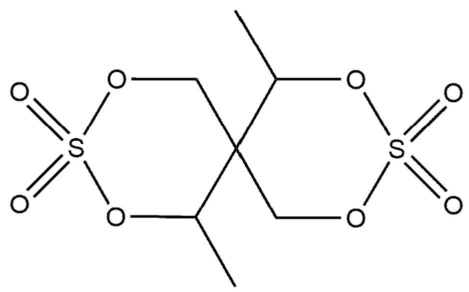

Chemical Formula 8

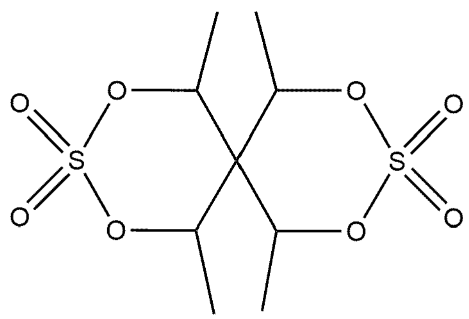

Chemical Formula 9

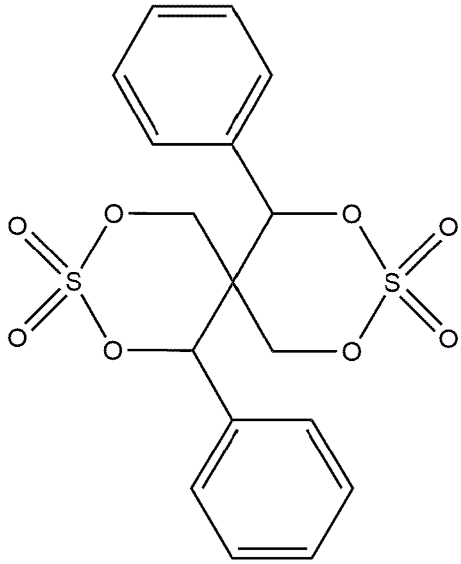

Chemical Formula 10

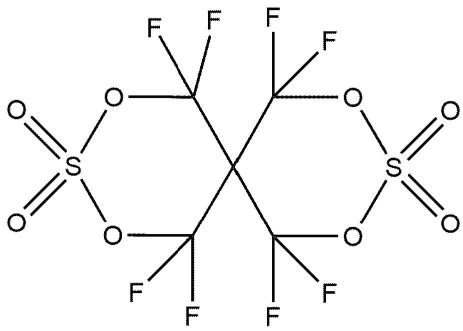

Chemical Formula 11

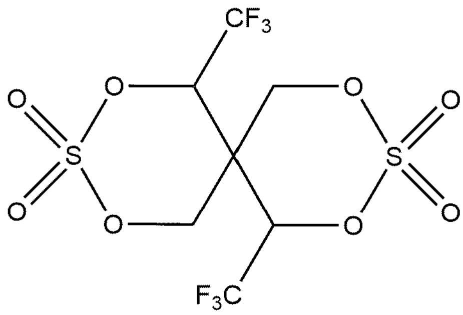

Chemical Formula 12

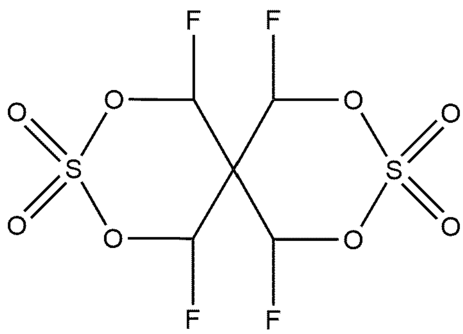

Chemical Formula 13

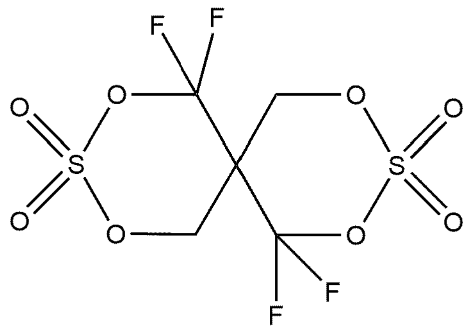

Chemical Formula 14

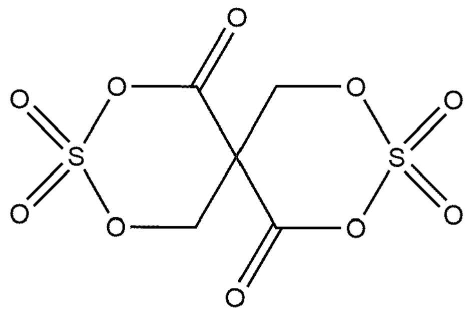

Chemical Formula 15

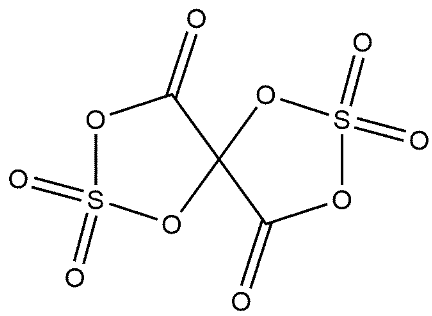

Chemical Formula 16

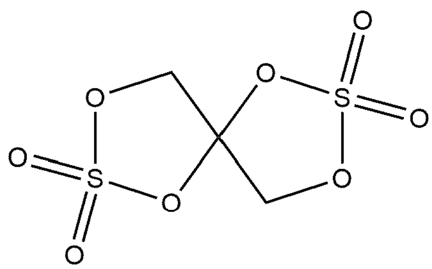

Chemical Formula 17

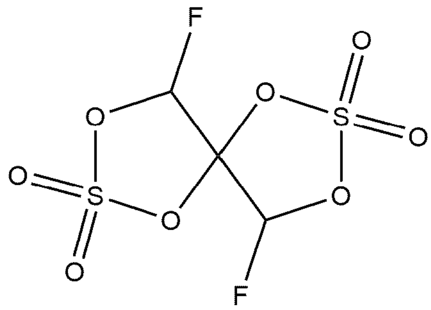

The term "alkyl group" or "alkylene group" herein refers to a branched or unbranched aliphatic hydrocarbon group. In some embodiments, the alkyl group may be substituted or unsubstituted. The alkyl group may be a methyl group, an ethyl group, a propyl group, an isopropyl group, a butyl group, an isobutyl group, a tert-butyl group, a pentyl group, a hexyl group, a cyclopropyl group, a cyclopentyl group, a cyclohexyl group, or a cycloheptyl group, but the present disclosure is not limited thereto, and each of them may or may not be substituted. In one example, the alkyl group may have 1 to 6 carbon atoms. For example, the C1 to C6 alkyl group may be methyl, ethyl, propyl, isopropyl, butyl, iso-butyl, sec-butyl, pentyl, 3-pentyl, hexyl, and/or the like.

The term "cycloalkyl group" refers to a fully saturated carbocycle ring or ring system. For example, it may be cyclopropyl, cyclobutyl, cyclopentyl, or cyclohexyl.

The term "alkenyl group" refers to a hydrocarbon group containing 2 to 20 carbon atoms and containing at least one carbon-carbon double bond, and may be, for example, an ethenyl group, a 1-propenyl group, a 2-propenyl group, a 2-methyl-1-propenyl group, a 1-butenyl group, a 2-butenyl group, a cyclopropenyl group, cyclopentenyl group, a cyclohexenyl group, a cycloheptenyl group, and/or the like, but the present disclosure is not limited thereto. In one example, the alkenyl group may be substituted or unsubstituted and may have 2 to 40 carbon atoms.

The term "alkynyl group" refers to a hydrocarbon group containing 2 to 20 carbon atoms and containing at least one carbon-carbon triple bond, and may be, for example, an ethynyl group, a 1-propynyl group, a 1-butynyl group, a 2-butynyl group, but the present disclosure is not limited thereto. In one example, an alkynyl group may be substituted or unsubstituted and may have 2 to 40 carbon atoms.

The term "aromatic" refers to a ring or ring system having a conjugated pi electron system and includes carbocyclic aromatics (e.g., phenyl groups) and heterocyclic aromatic groups (e.g., pyridine). The term includes monocyclic rings or fused polycyclic rings (i.e., rings that share adjacent pairs of atoms), provided that the entire ring system is aromatic.

The term "aryl group" refers to an aromatic ring or ring system in which the ring backbone contains only carbon (i.e., two or more fused rings sharing two adjacent carbon atoms). If an aryl group is a ring system, each ring in this system may be aromatic. For example, the aryl group includes a phenyl group, a biphenyl group, a naphthyl group, a phenanthrenyl group, a naphthacenyl group, and/or the like, but the present disclosure is not limited thereto. The aryl group may be substituted or unsubstituted.

The term "heteroaryl group" refers to an aromatic ring system having one ring or multiple fused rings, wherein at least one ring atom is not carbon, i.e., is a heteroatom. In a fused ring system, more than one heteroatom can be present in only one ring. For example, heteroatoms include oxygen, sulfur, and nitrogen but are not necessarily limited thereto. For example, the heteroaryl group may include a furanyl group, a thienyl group, an imidazolyl group, a quinazolinyl group, a quinolinyl group, an isoquinolinyl group, a quinoxalinyl group, a pyridinyl group, a pyrrolyl group, an oxazolyl group, an indolyl group, and/or the like, but the present disclosure is not limited thereto.

The terms "aralkyl group" and "alkylaryl group" refer to an aryl group linked as a substituent via an alkylene group, such as an aralkyl group having 7 to 14 carbon atoms, for example a benzyl group, a 2-phenylethyl group, a 3-phenylpropyl group, a naphthylalkyl group, and/or the like, but are not limited thereto. In one example, the alkylene group may be a lower alkylene group (i.e., an alkylene group having 1 to 4 carbon atoms).

"Halogen" is an element belonging to Group 17 of the periodic table of elements and may be, for example, F, Cl, Br, or I, and for example, may be F.

The bicyclic sulfate compound represented by Chemical Formula 1 may be included in an amount of 0.1 wt% to 3 wt%, for example 0.1 wt% to 2.5 wt%, 0.1 wt% to 2 wt%, or 0.5 wt% to 2 wt% based on 100 wt% of the non-aqueous electrolyte. If the content of the bicyclic sulfate compound satisfies the described ranges, side reactions and deterioration of the positive electrode according to some embodiments may be effectively controlled or selected and battery cycle-life characteristics may be improved. For example, if the content of the bicyclic sulfate compound is excessive, resistance may increase or high-temperature cycle-life characteristics may be deteriorated.

The additive of the non-aqueous electrolyte may further include other compounds in addition to the aforementioned bicyclic sulfate compound represented by Chemical Formula 1.

For example, the non-aqueous electrolyte may further include a cyclic carbonate as an additive. The cyclic carbonate may be, for example, vinylethylene carbonate (VEC), vinylene carbonate (VC), ethylene carbonate, a derivative thereof, and/or a combination thereof. The derivative of the ethylene carbonate may include, for example, fluoroethylene carbonate (FEC), difluoroethylene carbonate, chloroethylene carbonate, dichloroethylene carbonate, bromoethylene carbonate, dibromoethylene carbonate, nitroethylene carbonate, and cyanoethylene carbonate.

In one or more embodiments, the non-aqueous electrolyte may further include succinonitrile (SN), adiponitrile (AN), 1,3,6-hexane tricyanide (HTCN), propenesultone (PST), propanesultone (PS), lithium tetrafluoroborate ($LiBF_4$), lithium difluorophosphate ($LiPO_2F_2$), 2-fluoro biphenyl (2-FBP), and/or a combination thereof as an additive.

Each of the further additives (besides the aforementioned bicyclic sulfate compound represented by Chemical Formula 1) may be included in an amount of 0.1 wt% to 10 wt%, for example 0.5 wt% to 9 wt%, 1 wt% to 8 wt%, 1 wt% to 7 wt%, 1 wt% to 6 wt%, or 2 wt% to 5 wt% based on 100 wt% of the non-aqueous electrolyte. If the content of the additive satisfies the described ranges, cycle-life characteristics may be improved and an amount of gas generation and a resistance increase rate may be effectively controlled or selected without adversely affecting the battery.

**Organic Solvent**

The organic solvent serves as a medium for transmitting ions taking part in the electrochemical reaction of a battery. The organic solvent may be a carbonate-based solvent, an ester-based solvent, an ether-based solvent, a ketone-based solvent, an alcohol-based solvent, an aprotic solvent, and/or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether bond, and/or the like; amides such as dimethylformamide; dioxolanes such as 1,3-dioxolane, 1,4-dioxolane, and/or the like; sulfolanes, and/or the like.

The non-aqueous organic solvent may be utilized alone or in a mixture of two or more types (kinds), and if two or more types (kinds) are utilized in a mixture, a mixing ratio can be appropriately adjusted according to the desired or suitable battery performance, which is widely suitable to those working in the field.

As an example, the organic solvent may include linear carbonate and/or cyclic carbonate. For example, the organic solvent may include both (e.g., simultaneously) a linear carbonate and a cyclic carbonate, wherein a volume content of the linear carbonate may be greater than that of the cyclic carbonate. The volume ratio of linear carbonate and cyclic carbonate may be, for example, 2:1 to 9:1, 3:1 to 8:1, or 4:1 to 7:1.

The organic solvent may further include an aromatic hydrocarbon-based organic solvent. For example, the carbonate-based solvent and the aromatic hydrocarbon-based organic solvent may be mixed and utilized in a volume ratio of 1:1 to 30:1.

**Lithium Salt**

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of (e.g., at least one selected from among) $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

A concentration of lithium salt may be within the range of about 0.1 M to about 2.0 M. If the concentration of lithium salt is within the described ranges, the electrolyte has appropriate or suitable ionic conductivity and viscosity, and thus excellent or suitable performance can be achieved and lithium ions can move effectively.

**Separator**

Depending on the type or kind of the rechargeable lithium battery, a separator may be present between the positive electrode and the negative electrode. The separator may include polyethylene, polypropylene, polyvinylidene

fluoride, or a multilayer film of two or more layers thereof, and a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator may include a porous substrate and a coating layer including an organic material, an inorganic material, and/or a combination thereof on a (e.g., one or both surfaces or sides (e.g., opposite surfaces or sides)) of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or a mixture of two or more thereof.

The porous substrate may have a thickness of about 1 μm to about 40 μm, for example, about 1 μm to about 30 μm, about 1 μm to about 20 μm, about 5 μm to about 15 μm, or about 10 μm to about 15 μm.

The organic material may include a (meth)acryl-based copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles of (e.g., selected from among) $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or a combination thereof, but the present disclosure is not limited thereto. An average particle diameter ($D_{50}$) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 μm to about 20 μm, for example, about 1 μm to about 10 μm, or about 1 μm to about 5 μm.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

Examples and comparative examples of the present disclosure are described in detail herein. However, the following examples are only examples of the present disclosure, and the present disclosure is not limited to the following examples.

## EXAMPLES

### Example 1

#### 1. Manufacture of Positive Electrode

A first positive electrode active material having a composition of $LiNi_{0.91}Co_{0.07}Mn_{0.01}Al_{0.01}O_2$ in the form of (provided as) secondary particles made by agglomerating a plurality of primary particles and having an average particle diameter ($D_{50}$) of about 12.6 micrometer (μm) was prepared. A second positive electrode active material having a composition of $LiNi_{0.91}Co_{0.07}Mn_{0.01}Al_{0.01}O_2$ in the form of (provided as) single particles having an average particle diameter ($D_{50}$) of about 3 μm was prepared. The first positive electrode active material and the second positive electrode active material were mixed in a weight ratio of 7:3 to prepare a positive electrode active material.

97.7 wt% of the positive electrode active material, 1.3 wt% of a polyvinylidene fluoride (PVDF) binder, and 1.0 wt% of a carbon nanotube conductive material were mixed to prepare a positive electrode active material layer slurry, and this positive electrode active material layer slurry was coated on an aluminum foil current collector and then, dried and roll-pressed to manufacture a positive electrode.

#### 2. Manufacture of Negative Electrode

97.5 wt% of a graphite negative electrode active material, 1.5 wt% of carboxymethyl cellulose, and 1 wt% of a styrene butadiene rubber (SBR) in a water solvent were mixed to prepare a negative electrode active material layer slurry. The negative electrode active material layer slurry was coated on a copper foil current collector and then, dried and compressed to manufacture a negative electrode.

### 3. Preparation of Non-aqueous Electrolyte

A basic electrolyte was prepared by mixing ethylene carbonate (EC), ethylmethyl carbonate (EMC), and diethyl carbonate (DEC) in a volume ratio of 2:4:4 to prepare an organic solvent and dissolving $LiPF_6$ lithium salt at a concentration of 1.15 M. Subsequently, 1 wt% of a compound represented by Chemical Formula 6, 1.5 wt% of vinylene carbonate, and 0.5 wt% of vinylethylene carbonate based on 100 wt% of the non-aqueous electrolyte were added thereto to prepare a non-aqueous electrolyte.

Chemical Formula 6

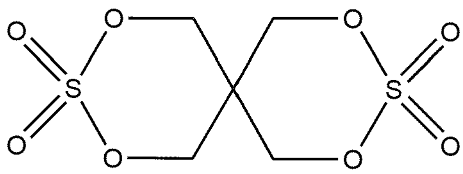

### 4. Manufacturing of Rechargeable Lithium Battery Cells

After interposing a polytetrafluoroethylene separator between positive and negative electrodes to manufacture an electrode structure and inserting the electrode structure into a case, the electrolyte was injected into the case to manufacture a rechargeable lithium battery cell.

### Example 2

A rechargeable lithium battery cell was manufactured in substantially the same manner as in Example 1 except that the first positive electrode active material and the second positive electrode active material were mixed in a ratio of 8:2 based on parts by weight to manufacture the positive electrode.

### Example 3

A rechargeable lithium battery cell was manufactured in substantially the same manner as in Example 1 except that the first positive electrode active material and the second positive electrode active material were mixed in a ratio of 9:1 based on parts by weight to manufacture the positive electrode.

### Example 4

A rechargeable lithium battery cell was manufactured in substantially the same manner as in Example 1 except that 0.5 wt% of the compound represented by Chemical Formula 6 was added to the electrolyte.

### Example 5

A rechargeable lithium battery cell was manufactured in substantially the same manner as in Example 1 except that 2 wt% of the compound represented by Chemical Formula 6 was added to the electrolyte.

### Comparative Example 1

A rechargeable lithium battery cell was manufactured in substantially the same manner as in Example 1 except that the first positive electrode active material alone was utilized without utilizing the second positive electrode active material.

### Comparative Example 2

A rechargeable lithium battery cell was manufactured in substantially the same manner as in Example 1 except that the second positive electrode active material alone was utilized without utilizing the first positive electrode active material.

**Comparative Example 3**

A rechargeable lithium battery cell was manufactured in substantially the same manner as in Example 1 except that the compound represented by Chemical Formula 6 was not added to the electrolyte.

**Comparative Example 4**

A rechargeable lithium battery cell was manufactured in substantially the same manner as in Example 1 except that 5 wt% of the compound represented by Chemical Formula 6 was added to the electrolyte.

For better understanding, each design of the positive electrodes and the electrolyte are briefly shown in Table 1.

**Evaluation Example 1: Evaluation of Initial Resistance**

The rechargeable lithium battery cells of Examples 1 to 5 and Comparative Examples 1 to 4 were initially charged to an upper limit voltage of 4.25 V at a constant current of 0.2 C and also, charged to 0.05 C at a constant voltage and then, discharged to a cut-off voltage of 2.8 V at 0.2 C at 25 °C. Subsequently, the cells were charged at 0.2 C to a potential corresponding to state of charge (SOC) 50 and paused for 2 hours and then, measured with respect to initial DC resistance based on the resulting voltage change obtained by applying a current equivalent to 1 C for 10 seconds thereto, and the results are shown in Table 1.

**Evaluation Example 2: Evaluation of Resistance Increase Rate during High-temperature Cycle-life**

The rechargeable lithium battery cells according to Examples 1 to 5 and Comparative Examples 1 to 4 were 50 cycles or more repeatedly charged at 1.0 C within a voltage range of 2.8 V to 4.25 V and discharged at 1.0 C at 45 °C after the initial charge and discharge in Evaluation Example 1. After the 50 cycles, the cells were remeasured with respect to DC resistance. Then, a resistance increase rate during the high-temperature cycle-life was calculated by subtracting the initial resistance from the resistance at the $50^{th}$ cycle and multiplying 100 therewith, and the results is shown in Table 1.

**Evaluation Example 3: Evaluation of Amount of Gas Generation**

The rechargeable lithium battery cells of Examples 1 to 5 and Comparative Examples 1 to 4 were 50 cycles charged and discharged at 45 °C as in Evaluation Example 2 and then, measured with respect to a battery thickness increase rate according to Equation 1, and the results are shown in Table 1 to indirectly evaluate an amount of gas generation.

{(Cell thickness after 50 cycles) - (Cell thickness before initial charge and discharge)}/(Cell thickness before initial charge and discharge) × 100

Table 1)

| | Weight ratio of first and second positive electrode active materials | Amount of Chemical Formula 6 in electrolyte (wt%) | Initial resista nce (Ω) | Resistance increase rate during high-temperature cycle-life | Cell thickness increase rate |
|---|---|---|---|---|---|
| Example 1 | 7:3 | 1 | 11.34 | 34.8% | 31.2% |
| Example 2 | 8:2 | 1 | 11.20 | 42.3% | 34.0% |
| Example 3 | 9:1 | 1 | 11.08 | 47.2% | 36.1% |
| Example 4 | 7:3 | 0.5 | 11.18 | 40.3% | 31.8% |
| Example 5 | 7:3 | 2 | 11.38 | 38.9% | 32.0% |
| Comparative Example 1 | 10:0 | 1 | 10.96 | 51.6% | 41.1% |

(continued)

| | Weight ratio of first and second positive electrode active materials | Amount of Chemical Formula 6 in electrolyte (wt%) | Initial resistance (Ω) | Resistance increase rate during high-temperature cycle-life | Cell thickness increase rate |
|---|---|---|---|---|---|
| Comparative Example 2 | 0:10 | 1 | 12.04 | 55.7% | 30.8% |
| Comparative Example 3 | 7:3 | 0 | 11.01 | 67.3% | 37.0% |
| Comparative Example 4 | 7:3 | 5 | 12.53 | 62.3% | 33.5% |

Referring to Table 1, Examples 1 to 5 each exhibited appropriate or suitable initial resistance and also, a resistance increase rate of less than or equal to 47.2% during the high-temperature cycle-life, which confirmed excellent or suitable high-temperature cycle-life characteristics, and were controlled or selected to be a battery thickness increase rate of less than or equal to 36.1%, which confirmed that the amount of gas generation was reduced.

Comparative Example 1, in which the first positive electrode active material alone was applied to the positive electrode, exhibited a high resistance increase rate during the high-temperature cycle-life but a high thickness increase rate and thus a large amount of gas generation. Comparative Example 2, in which the second positive electrode active material alone was applied to the positive electrode, exhibited inferior initial resistance, as compared to Examples 1 to 5, and a high resistance increase rate during the high-temperature cycle-life and thus deteriorated cycle-life characteristics. Comparative Example 3, in which the bicyclic sulfate compound was not added to the electrolyte, exhibited an excessively high resistance increase rate during the high-temperature cycle-life but inferior cycle-life characteristics and also, an excessively high battery thickness increase rate and thus an excessive amount of gas generation. Comparative Example 4, in which 5 wt% of the bicyclic sulfate compound was utilized, exhibited inferior initial resistance and a high resistance increase rate during the high-temperature cycle-life.

**Reference Numerals**

| | |
|---|---|
| 100: rechargeable lithium battery | 10: positive electrode |
| 11: positive electrode lead tab | 12: positive terminal |
| 20: negative electrode | 21: negative electrode lead tab |
| 22: negative terminal | 30: separator |
| 40: electrode assembly | 50: case |
| 60: sealing member | 70: electrode tab |
| 71: positive electrode tab | 72: negative electrode tab |

## Claims

**1.** A rechargeable lithium battery (100), comprising:

a positive electrode (10);
a negative electrode (20);
a separator (30); and
a non-aqueous electrolyte,
the positive electrode (10) comprising:

a first positive electrode active material in a form of secondary particles and comprising a lithium nickel-based composite oxide, the secondary particles comprising a plurality of primary particles, the plurality of primary particles being agglomerated, and
a second positive electrode active material in a form of single particles and comprising a lithium nickel-based composite oxide,
the non-aqueous electrolyte comprising an organic solvent, a lithium salt, and an additive,
the additive comprising a bicyclic sulfate compound represented by Chemical Formula 1:

Chemical Formula 1

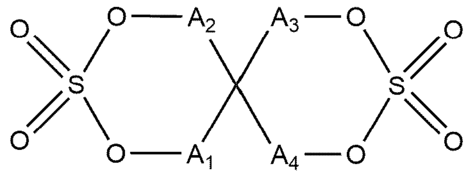

in Chemical Formula 1, $A_1$, $A_2$, $A_3$, and $A_4$ are the same or different from each other and are each independently a covalent bond, a substituted or unsubstituted C1 to C5 alkylene group, a carbonyl group, or a sulfinyl group,
wherein $A_1$ and $A_2$ are not simultaneously a covalent bond, and $A_3$ and $A_4$ are not simultaneously a covalent bond,
wherein "substituted" refers to replacement of at least one hydrogen of a compound by a substituent of a halogen atom, a hydroxy group, a C1 to C20 alkoxy group, a nitro group, a cyano group, amine group, an imino group, an azido group, an amidino group, a hydrazino group, a hydrazono group, a carbonyl group, a carbamyl group, a thiol group,
an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, and a C3 to C20 heteroaryl group.

**2.** The rechargeable lithium battery (100) as claimed in claim 1, wherein
an average particle diameter ($D_{50}$) of the secondary particles of the first positive electrode active material is larger than an average particle diameter ($D_{50}$) of the single particles of the second positive electrode active material, wherein the average particle diameter ($D_{50}$) is measured by laser diffraction.

**3.** The rechargeable lithium battery (100) as claimed in claim 1 or 2, wherein

an average particle diameter ($D_{50}$) of the secondary particles of the first positive electrode active material is 10 micrometer (μm) to 20 μm, and
an average particle diameter ($D_{50}$) of the single particles of the second positive electrode active material is 0.5 μm to 8 μm, wherein the average particle diameter ($D_{50}$) is measured by laser diffraction.

**4.** The rechargeable lithium battery (100) as claimed in any one of the preceding claims, wherein
the first positive electrode active material comprises an amount of 60 wt% to 95 wt% and the second positive electrode active material comprises an amount of 5 wt% to 40 wt%, based on a total of 100 wt% of the first positive electrode active material and the second positive electrode active material.

**5.** The rechargeable lithium battery (100) as claimed in any one of the preceding claims, wherein
the lithium nickel-based composite oxide of the first positive electrode active material and the lithium nickel-based composite oxide of the second positive electrode active material are the same or different from each other, and each independently comprise nickel in an amount greater than or equal to 80 mol%.

**6.** The rechargeable lithium battery (100) as claimed in any one of the preceding claims, wherein

the lithium nickel-based composite oxide of the first positive electrode active material and the lithium nickel-based composite oxide of the second positive electrode active material are the same or different from each other, and are each independently represented by Chemical Formula 11:

Chemical Formula 11 $$Li_{a1}Ni_{x1}M^1_{y1}M^2_{z1}O_{2-b1}X_{b1}$$

in Chemical Formula 11,

$$0.9 \leq a1 \leq 1.8,$$

$$0.3 \leq x1 \leq 1,$$

$$0 \leq y1 \leq 0.7,$$

$$0 \leq z1 \leq 0.7,$$

$$0.9 \leq x1+y1+z1 \leq 1.1,$$

$$0 \leq b1 \leq 0.1,$$

$M^1$ and $M^2$ are each independently at least one selected from among Al, B, Ba, Ca, Ce, Co, Cr, Cu, Fe, Mg, Mn, Mo, Nb, Si, Sn, Sr, Ti, V, W, and Zr, and
X is at least one element selected from among F, P, and S.

**7.** The rechargeable lithium battery (100) as claimed in claim 6, wherein

in Chemical Formula 11, $0.7 \leq x1 \leq 1$, $0 \leq y1 \leq 0.3$, and $0 \leq z1 \leq 0.3$;
preferably, $0.8 \leq x1 \leq 1$, $0 \leq y1 \leq 0.2$, and $0 \leq z1 \leq 0.2$;
in particular, $0.9 \leq x1 \leq 1$, $0 \leq y1 \leq 0.1$, and $0 \leq z1 \leq 0.1$.

**8.** The rechargeable lithium battery (100) as claimed in any one of the preceding claims, wherein

the non-aqueous electrolyte comprises an amount of 0.1 wt% to 3 wt% of the bicyclic sulfate compound, based on 100 wt% of the non-aqueous electrolyte;
in particular an amount of 0.5 wt% to 2 wt% of the bicyclic sulfate compound, based on 100 wt% of the non-aqueous electrolyte.

**9.** The rechargeable lithium battery as claimed in any one of the preceding claims, wherein

in Chemical Formula 1, at least one selected from among $A_1$, $A_2$, $A_3$, and $A_4$ is an unsubstituted C1 to C5 alkylene group or a substituted C1 to C5 alkylene group, and
a substituent of the substituted C1 to C5 alkylene group is a halogen group, a C1 to C20 alkyl group substituted or unsubstituted with a halogen, a C2 to C20 alkenyl group substituted or unsubstituted with a halogen, a C2 to C20 alkynyl group substituted or unsubstituted with a halogen, a C3 to C20 cycloalkenyl group substituted or unsubstituted with a halogen, a C3 to C20 heterocyclyl group substituted or unsubstituted with a halogen, a C6 to C40 aryl group substituted or unsubstituted with a halogen, a C2 to C40 heteroaryl group substituted or unsubstituted with a halogen, or a polar functional group comprising at least one heteroatom.

**10.** The rechargeable lithium battery (100) as claimed in claim 9, wherein
in Chemical Formula 1, at least one selected from among $A_1$, $A_2$, $A_3$, and $A_4$ is an unsubstituted C1 to C5 alkylene group or a substituted C1 to C5 alkylene group, and the substituent of the substituted C1 to C5 alkylene group is a halogen, a methyl group, an ethyl group, a propyl group, an isopropyl group, a butyl group, a tert-butyl group, a trifluoromethyl group, a tetrafluoroethyl group, a phenyl group, a naphthyl group, a tetrafluorophenyl group, a pyrrolyl group, or a pyridinyl group.

**11.** The rechargeable lithium battery (100) as claimed in any one of claims 1 to 8, wherein
the bicyclic sulfate compound is represented by Chemical Formula 2 or Chemical Formula 3:

Chemical Formula 2

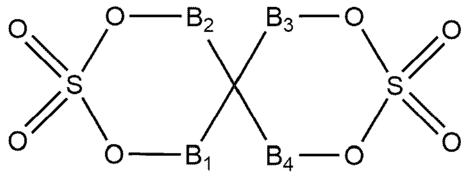

Chemical Formula 3

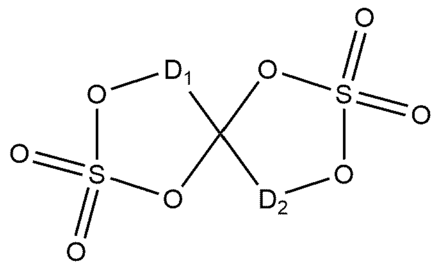

,

$B_1$, $B_2$, $B_3$, and $B_4$ of Chemical Formula 2 are the same or different from each other and $D_1$ and $D_2$ of Chemical Formula 3 are the same or different from each other and are each independently $-C(E_1)(E_2)-$, a carbonyl group, or a sulfinyl group, and

$E_1$ and $E_2$ are the same or different from each other and are each independently hydrogen, a halogen, a C1 to C20 alkyl group substituted or unsubstituted with a halogen, a C2 to C20 alkenyl group substituted or unsubstituted with a halogen, a C2 to C20 alkynyl group substituted or unsubstituted with a halogen, a C3 to C20 cycloalkenyl group substituted or unsubstituted with a halogen, a C3 to C20 heterocyclyl group substituted or unsubstituted with a halogen, a C6 to C40 aryl group of substituted or unsubstituted with a halogen, or a C2 to C40 heteroaryl group substituted or unsubstituted with a halogen,

wherein "substituted" refers to replacement of at least one hydrogen of a compound by a substituent of a halogen atom, a hydroxy group, a C1 to C20 alkoxy group, a nitro group, a cyano group, amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, and a C3 to C20 heteroaryl group.

**12.** The rechargeable lithium battery (100) as claimed in any one of claims 1 to 8, wherein

the bicyclic sulfate compound is represented by Chemical Formula 4 or Chemical Formula 5:

Chemical Formula 4

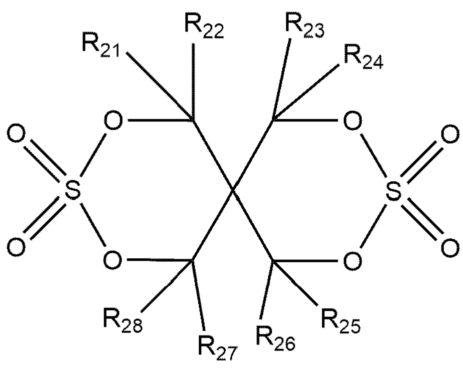

Chemical Formula 5

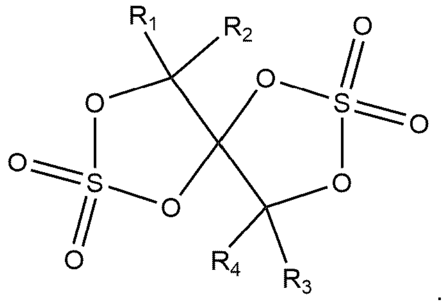

$R_{21}$, $R_{22}$, $R_{23}$, $R_{24}$, $R_{25}$, $R_{26}$, $R_{27}$, and $R_{28}$ in Chemical Formula 4 are the same or different from each other and $R_1$, $R_2$, $R_3$, and $R_4$ in Chemical Formula 5 are the same or different from each other and are each independently hydrogen, a halogen, a C1 to C20 alkyl group substituted or unsubstituted with a halogen, a C6 to C40 aryl group substituted or unsubstituted with a halogen, or a C2 to C40 heteroaryl group substituted or unsubstituted with a halogen,

wherein "substituted" refers to replacement of at least one hydrogen of a compound by a substituent of a halogen atom, a hydroxy group, a C1 to C20 alkoxy group, a nitro group, a cyano group, amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, and a C3 to C20 heteroaryl group.

**13.** The rechargeable lithium battery (100) as claimed in any one of claims 1 to 8, wherein the bicyclic sulfate compound is any one selected from among Chemical Formula 6 to Chemical Formula 17:

Chemical Formula 6

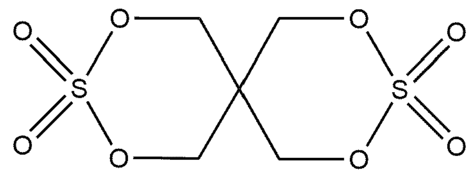

Chemical Formula 7

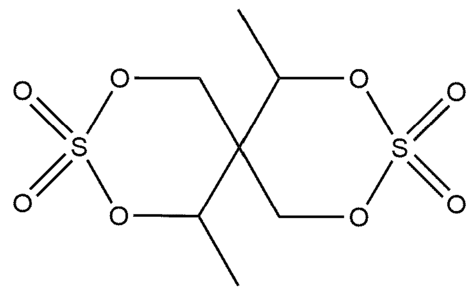

Chemical Formula 8

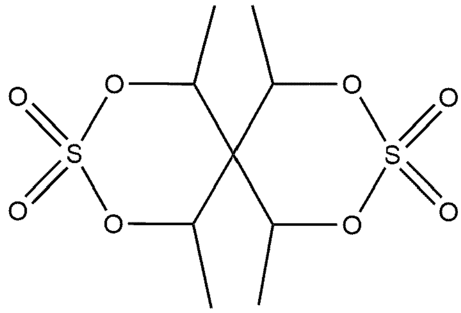

Chemical Formula 9

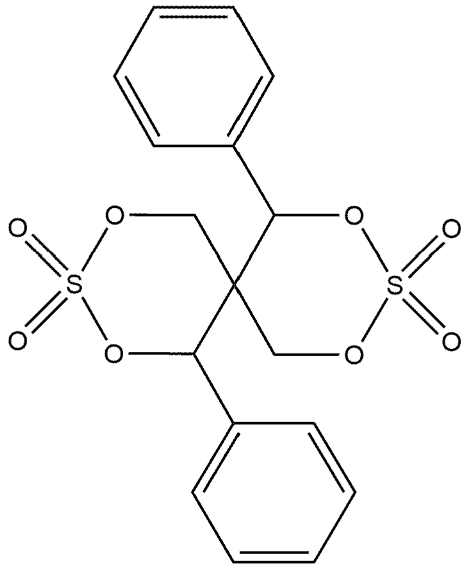

Chemical Formula 10

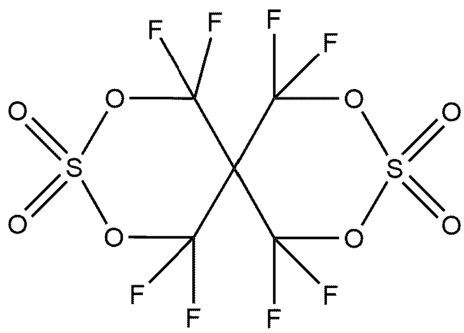

Chemical Formula 11

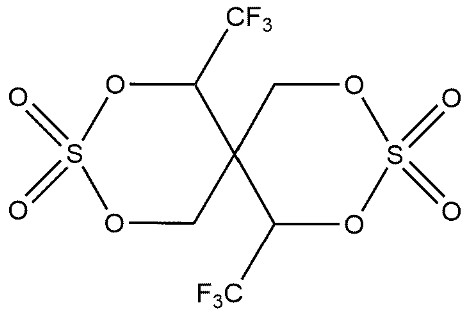

Chemical Formula 12

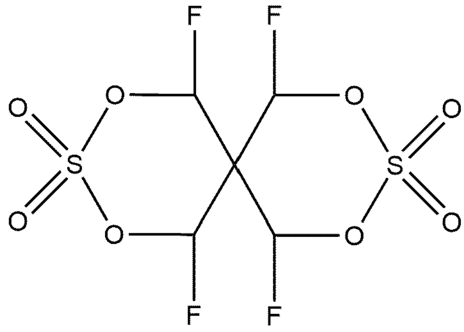

Chemical Formula 13

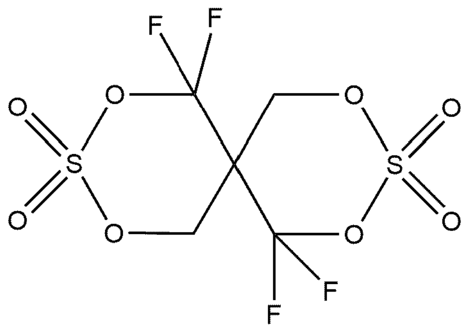

Chemical Formula 14

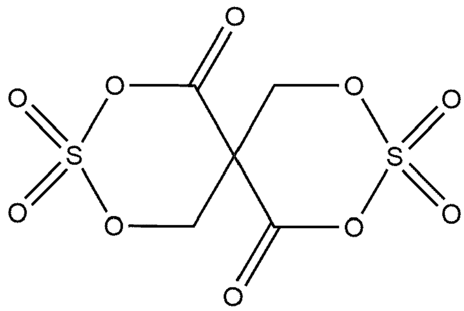

Chemical Formula 15

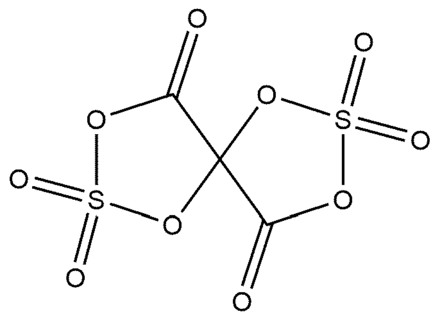

Chemical Formula 16

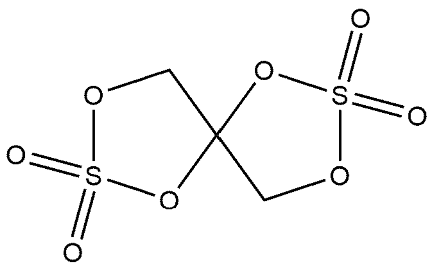

Chemical Formula 17

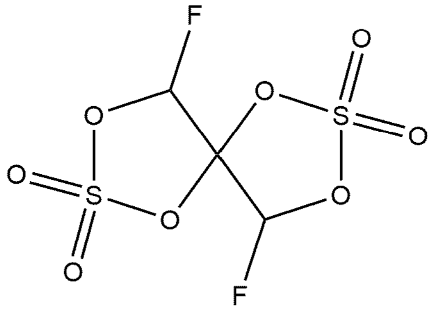

.

**14.** The rechargeable lithium battery (100) as claimed in any one of the preceding claims, wherein the non-aqueous electrolyte further comprises at least one of vinylene carbonate (VC), fluoroethylene carbonate (FEC), difluoroethylene carbonate (DFEC), chloroethylene carbonate (CEC), dichloroethylene carbonate (DCEC), bromoethylene carbonate (BEC), dibromoethylene carbonate (DBEC), nitroethylene carbonate, cyanoethylene carbonate, vinylethylene carbonate (VEC), succinonitrile (SN), adiponitrile (AN), 1,3,6-hHexane tricyanide (HTCN), propenesultone (PST), propanesultone (PS), lithium tetrafluoroborate ($LiBF_4$), lithium difluorophosphate ($LiPO_2F_2$), and 2-fluoro biphenyl (2-FBP).

**15.** The rechargeable lithium battery (100) as claimed in any one of the preceding claims, wherein the organic solvent is a carbonate-based solvent, an ester-based solvent, an ether-based solvent, a ketone-based solvent, an alcohol-based solvent, an aprotic solvent, or a combination thereof.

FIG. 1

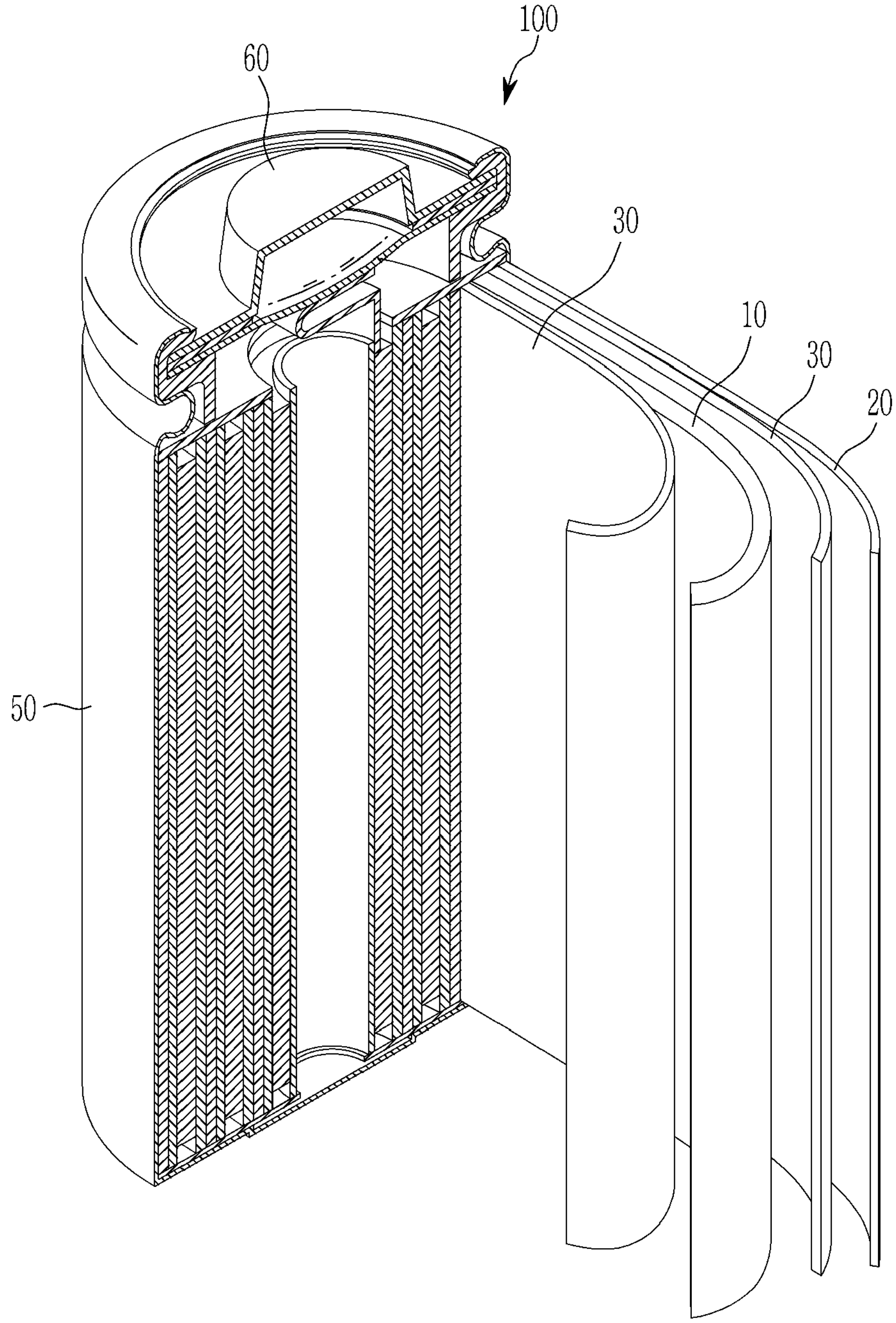

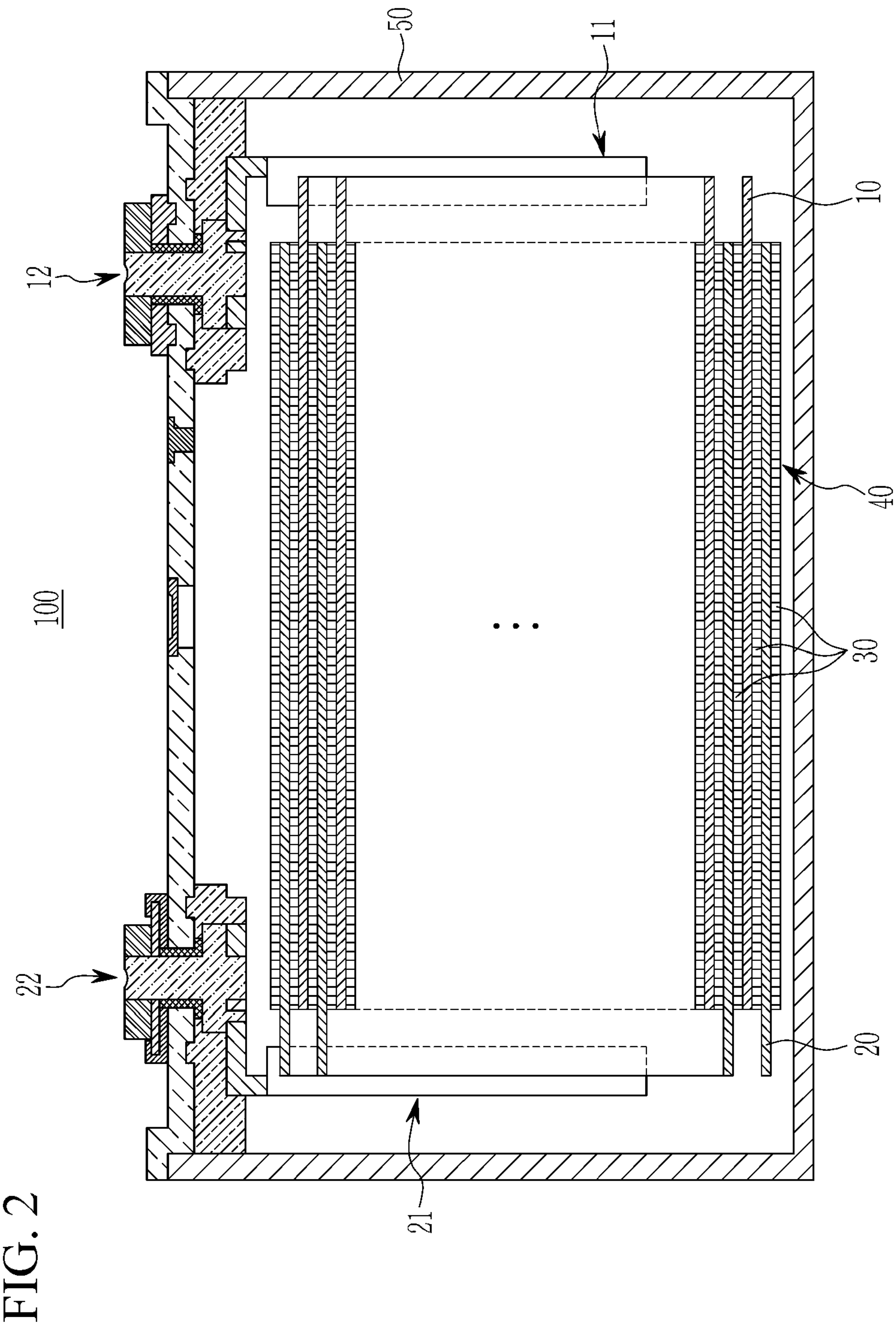


FIG. 2

FIG. 3

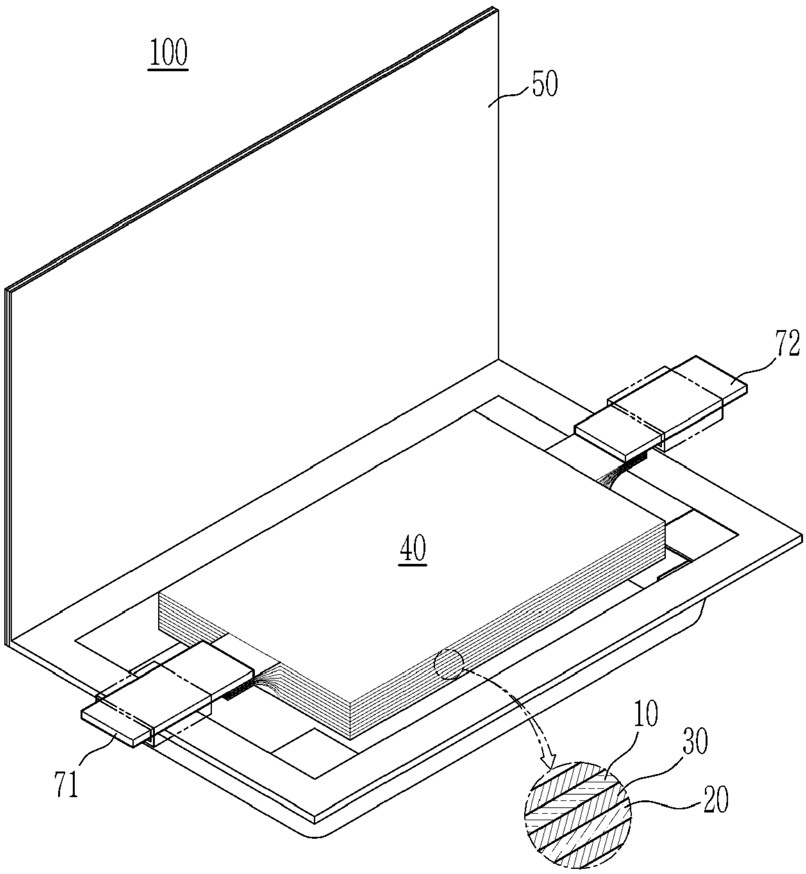

FIG. 4